# EUROPEAN PATENT APPLICATION

(11) **EP 0 715 463 A2**
(43) Date of publication of application: **05.06.1996**
(21) Application number: 95308390.4
(22) Date of filing: 22.11.1995
(51) Int. Cl.: H04N 7/087, H04N 7/00

(54) **Video signal processing**

(30) Priority: 28.11.1994 GB 9424131
(71) Applicant: Snell & Wilcox Limited, Petersfield, Hampshire GU31 5AZ (GB)
(72) Inventor: Steinberg, Avidgor, Petersfield, Hampshire GU32 3LS (GB)
(74) Representative: Garratt, Peter Douglas

(57) **Abstract**

A video signal containing sub-title information in the black bands of a letterbox format is processed to time shift the sub-title information. This is then used as a key to add a plain background signal to the video to produce appropriately coloured sub-titles in the active picture area. Sub-titles then remain visible on a wide screen television receiver.

## Description

This invention relates to the processing of analogue or digital video signals and is particularly concerned with the display of subtitles or other textual matter.

Foreign language film material having a wider aspect ratio than 4:3 is commonly broadcast in letterbox format and the black bars above and below the active image area provide a convenient location for the transmission of subtitles. The latest models of wide-screen television receivers are of course able to display such film material without black bars but this results in the complete loss of subtitles. It has been proposed that this difficulty can be overcome by the simultaneous transmission of subtitles on teletext. Whilst this appears to be a satisfactory solution, since a wide-screen television receiver can be assumed to have a teletext facility, it overlooks the fact that simultaneous teletext transmissions are not available, for example, when the programme has been recorded on a domestic video recorder. Under those circumstances, subtitles would again be lost.

It is an object of this invention to provide for the display of subtitles or similar textual information on wide-screen television receivers, without reliance upon simultaneous teletext transmissions.

Accordingly, the present invention consists in one aspect in a method of processing an incoming video signal containing textual matter outside the active image area, comprising the steps of identifying time regions of the video signal associated with areas outside the active image area, time shifting signal information from said time regions and combining the time shifted signal information with the video signal to position the textual matter within the active image area.

Preferably, signal information is detected within said time regions by reference to a threshold.

Advantageously, signal information is written to and read from a store, said time shifting operation being achieved through control of the read and write addresses.

Suitably, the read and write addresses can be controlled so as to vary the position of the textual matter within the active image area and optionally the size of the textual matter.

Conveniently, the time shifted signal information can be assigned a colour which is selected to provide an appropriate contrast with the active image area immediately adjacent the textual matter.

Circuitry for performing a method according to this invention can be provided at sufficiently low cost for incorporation within a wide-screen television receiver.

In another aspect, the present invention consists in signal processing apparatus for processing an incoming video signal containing textual matter outside the active image area, comprising means for identifying time regions of the video signal associated with areas outside the active image area; time shift means for time shifting signal information from said time regions and means for combining the time shifted signal information with the video signal to position the textual matter within the active image area.

Preferably, said means for identifying time regions of the video signal comprises gate means for selecting said time regions.

Suitably, the apparatus further comprises comparison means for detecting signal information within said time regions by reference to a threshold.

Advantageously, the time shift means comprises a store, and means for controlling read and write addresses of the store.

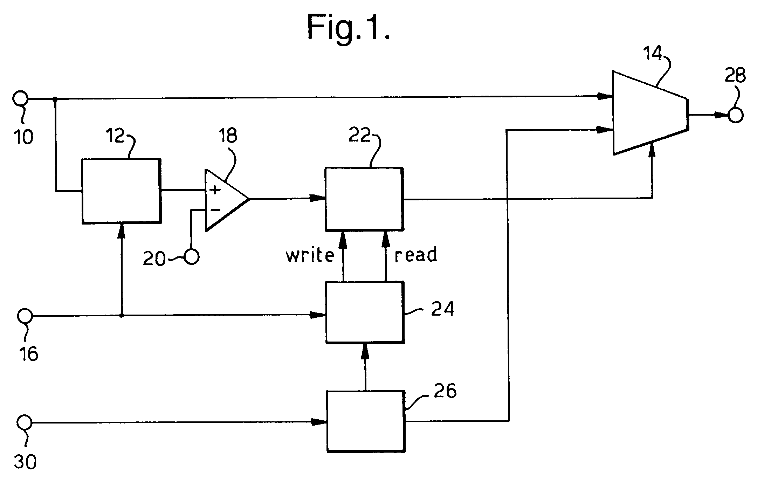

The invention will now be described by way of example with reference to the accompanying drawings in which:-
Figure 1 is a block diagram of a signal processor according to the present invention; and
Figure 2 is a series of diagrams illustrating the manner by which subtitles can be repositioned in accordance with this invention.

A video signal received at terminal 10 passes to a gate 12 and also to one input of a multiplexer 14. The gate 12 receives from terminal 16 line and field pulses previously detected from the video signal and passes only those time regions of the video signal corresponding with the black bands of the letterbox format. A comparator 18 is set with a predetermined threshold level from terminal 20 such that, within the black bands, only subtitle information is detected. This information is passed from the comparator 18 to a memory 21. An address generator 24 receives the line and field pulses from terminal 16 and under control of a microprocessor 26, varies the write and read addresses such that the detected subtitle information is shifted in time so as to correspond with a location within the active image area. The repositioned subtitle information is then fed to the multiplexer 14 as effectively a key signal for the original video signal. The signal which is multiplexed with the incoming video signal - using as a key the repositioned subtitle information - is under microprocessor control and will in the simplest form be a selected plain colour. This produces at the output terminal 28 a signal containing subtitles of an appropriate colour, within the active image area. Conveniently, the microprocessor 26 receives control inputs at terminal 30 from the conventional remote control unit of the television receiver, enabling the viewer to select, through appropriate time shifting, a desired location for the subtitle information and an appropriate colour. Again through suitable control of the read and write addresses, the facility can be provided for the viewer to control the size of the text of the subtitle. By repeated reading of the lines constituting the subtitle information, a basic but satisfactory vertical expansion can be achieved. A similar horizontal expansion can be achieved by repeated reading of samples within a line.

It will be recognised that numerous techniques can be employed for improving the legibility or general appearance of the subtitles. By suitable control of the key signal and the "foreground" signal (the original video being the "background") with delay and expansion of the key, drop shadow or other contrast effects can be generated. The subtitles need not be plain colour and a border region could be defined around the subtitle as a whole, further to improve clarity.

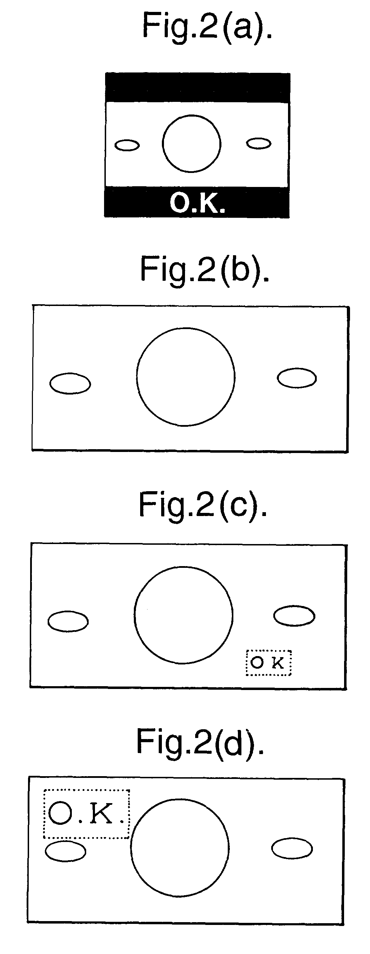

Turning to Figure 2, there is illustrated diagrammatically at 2(a) a wide-screen source displayed in letterbox format with subtitle information in the lower black band. Conventional display of this signal on a wide-screen receiver would as shown at 2(b) result in the loss of the subtitle information. The present invention provides for repositioning of the subtitle information within the active image area as shown in Figure 2(c). This subtitle information can be repositioned and rescaled as shown in Figure 2(d).

It should be understood that this invention has been described by way of example only and numerous alternative arrangements can be envisaged without departing from the scope of the invention. The invention can be put into effect with analogue or digital implementations. In an analogue environment, the time shifting operation could be performed by a simple delay. Similarly, means other than the described gate and comparator could be employed for selecting these time regions of the video signal associated with areas outside the active image area and detecting the subtitle signal information. In a low noise environment, it should be possible to omit threshold detection since the subtitle information will be the only "non-black" signal in the black bars. Whilst the simplicity of the circuitry required makes it suitable for inclusion within a television receiver, processing at an earlier part in the broadcasting chain is not precluded.

## Claims

1. A method of processing an incoming video signal containing textual matter outside the active image area, comprising the steps of identifying time regions of the video signal associated with areas outside the active image area, time shifting signal information from said time regions and combining the time shifted signal information with the video signal to position the textual matter within the active image area.

2. A method according to Claim 1, wherein signal information is detected within said time regions by reference to a threshold.

3. A method according to Claim 1 or Claim 2, wherein signal information is written to and read from a store, said time shifting operation being achieved through control of the read and write addresses.

4. A method according to Claim 3, wherein the read and write addresses can be controlled so as to vary the position of the textual matter within the active image area and optionally the size of the textual matter.

5. A method according to any one of Claims 1 to 4, wherein the step of combining the time shifted signal information with the video signal comprises utilising the time shifted signal as a key to switch between the video signal and a background signal.

6. Signal processing apparatus for processing an incoming video signal containing textual matter outside the active image area, comprising means for identifying time regions of the video signal associated with areas outside the active image area; time shift means for time shifting signal information from said time regions and means for combining the time shifted signal information with the video signal to position the textual matter within the active image area.

7. Signal processing apparatus according to Claim 6, wherein said means for identifying time regions of the video signal comprises gate means for selecting said time regions.

8. Signal processing apparatus according to Claim 6 or Claim 7, further comprising comparison means for detecting signal information within said time regions by reference to a threshold.

9. Signal processing means according to any one of Claims 6, 7 and 8, wherein said time shift means comprises a store and means for controlling read and write addresses of the store.

10. Signal processing means according to any one of Claims 6 to 9, wherein said means for combining comprises a multiplexer receiving as inputs the video signal and a background signal and receiving as control signal said time shifted signal information.
